## Europäisches Patentamt
## European Patent Office
## Office européen des brevets

(19)

(11) Veröffentlichungsnummer: **0 283 429**
**A2**

(12)

# EUROPÄISCHE PATENTANMELDUNG

(21) Anmeldenummer: 88730069.7

(22) Anmeldetag: 18.03.88

(51) Int. Cl.⁴: **H 04 M 19/04**
**H 04 Q 1/38**

(30) Priorität: 19.03.87 DE 3709012

(43) Veröffentlichungstag der Anmeldung:
21.09.88 Patentblatt 88/38

(84) Benannte Vertragsstaaten:
AT BE CH DE LI NL SE

(71) Anmelder: **FRITZ KUKE KG**
**Am Juliusturm 67-73**
**D-1000 Berlin 20 (DE)**

(72) Erfinder: **Düning, Rüdiger, Dipl.-Ing.**
**Maulbeerallee 22**
**D-1000 Berlin 20 (DE)**

**Weber, Manfred, Dipl.-Ing.**
**Jugendweg 6**
**D-1000 Berlin 13 (DE)**

(74) Vertreter: **Pfenning, Meinig & Partner**
**Kurfürstendamm 170**
**D-1000 Berlin 15 (DE)**

(54) Schaltungsanordnung zur Signalisierung eines Anrufes für ein in ein digitales Fernsprechnetz geschaltetes Endgerät.

(57) Es wird eine Schaltungsanordnung zur Signalisierung eines Anrufes für ein in ein digitales Fernsprechnetz geschaltetes Endgerät vorgeschlagen, wobei das Anrufsignal als digitales Signal an einer Schnittstelle vorliegt. Die Schaltungsanordnung weist einen Schnittstellen-Anpassungskreis auf, der mit seinen Eingangklemmen an der Schnittstelle liegt. Die Eingangsklemmen sind mit dem einen Teil einer galvanisch getrennten Signalübertragungseinheit verbunden, deren anderer Teil in einem mit Gleichstrom versorgten Ansteuerkreis liegt und an einen Schalter angeschlossen ist. Der andere Teil der als Optokoppler ausgebildeten Signalübertragungseinheit steuert den Schalter abhängig von dem digitalen Signal an der Schnittstelle an. Der Schalter selbst steht mit mindestens einem Signalgerät in Verbindung.

FIG.1

EP 0 283 429 A2

## Beschreibung

Schaltungsanordnung zur Signalisierung eines Anrufes für ein in ein digitales Fernsprechnetz geschaltetes Endgerät

Die Erfindung betrifft eine Schaltungsanordnung zur Signalisierung eines Anrufes für ein in ein digitales Fernsprechnetz geschaltetes Endgerät nach dem Oberbegriff des Anspruchs 1.

Es ist beabsichtigt, das heutzutage überwiegend vorhandene analoge Fernmeldevermittlungs-und Übertragungsnetz durch ein digitales Netz, das sogenannte diensteintegrierende digitale Fernsprechnetz (ISDN = integrated services digital Network), ersetzt werden soll. Zur Übertragung der Informationen ist eine Kanalstruktur von zwei digitalen Basiskanälen mit 64 kbit/s und einem digitalen Steuerkanal mit einer Bitrate von 16 kbit/s vorgesehen.Durch diese Kanalstruktur ist ein paralleler Anschluß von unterschiedlichen Endgeräten, beispielsweise Fernsprechapparaten, Bildschirmtext, Faksimile und so weiter bei gleichzeitiger Nutzung zweier Dienste möglich. Zur Anpassung der durch das digitale Netz vorgegebenen Schnittstellen müssen Zusatzeinrichtungen die Bedingungen der Schnittstellen der Endgeräte erfüllen. Beispielsweise werden an der sogenannten einfachen Y-Schnittstelle Geräte, wie Anrufkennzeichner und Zweitwecker betrieben.

Der Erfindung liegt die Aufgabe zugrunde, eine Schaltungsanordnung zur Signalisierung eines Anrufes für ein in ein digitales Fernsprechnetz geschaltetes Endgerät zu schaffen, die an die durch das digitale Fernsprechnetz vorgegebene Schnittstellenbedingung angepaßt ist.

Diese Aufgabe wird erfindungsgemäß durch die kennzeichnenden Merkmale des Hauptanspruchs gelöst. Durch die in den Unteransprüchen angegebenen Maßnahmen sind vorteilhafte Weiterbildungen und Verbesserungen möglich.

Ausführungsbeispiele der Erfindung sind in der Zeichnung dargestellt und werden in der nachfolgenden Beschreibung näher erläutert. Es zeigen:

Fig. 1 die schaltungsgemäße Ausgestaltung eines ersten Ausführungsbeispiels, bei dem die Signalisierung über ein Starkstrom-Signalgerät erfolgt, und

Fig. 2 die schaltungsgemäße Ausgestaltung eines zweiten Ausführungsbeispiels.

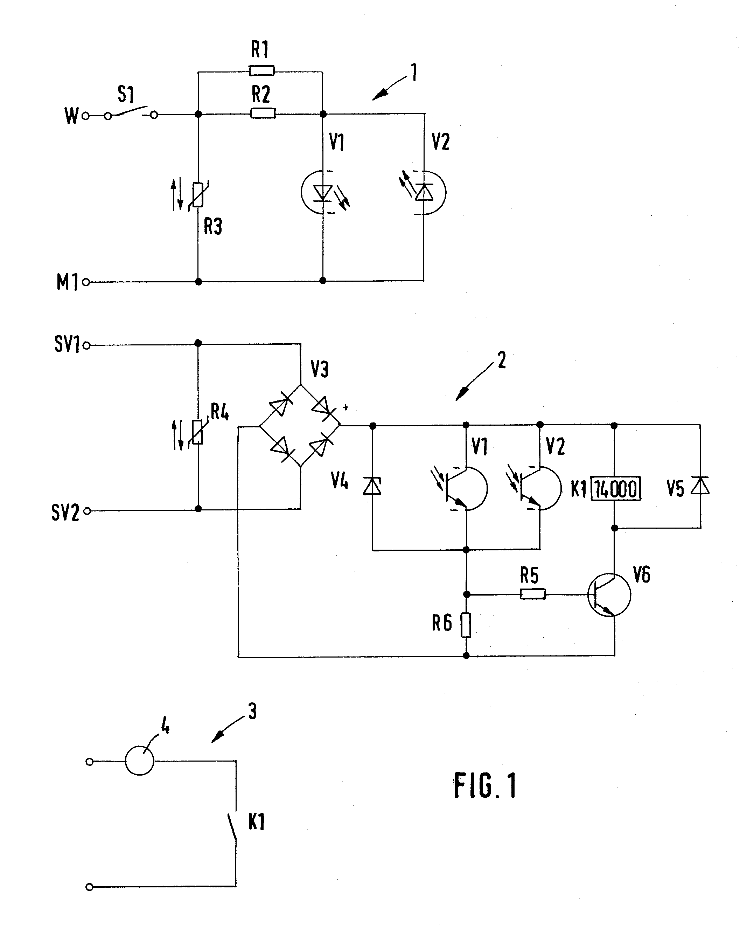

In Fig. 1 ist oben ein Schnittstellen-Anpassungskreis 1 und darunter ein Ansteuerkreis 2 dargestellt. Die Klemmen W und M1 des Anpassungskreises 1 liegen an der einfachen Y-Schnittstelle eines Endgerätes, beispielsweise eines Fernsprechapparates, das für das digitale Netz ausgebildet ist. Der Anpassungskreis 1 weist zwei antiparallel geschaltete Sendedioden von zwei Optokopplern V1, V2 auf, die einerseits über die parallelliegenden Widerstände R1, R2 und andererseits direkt an die Klemmen W, M1 angeschlossen sind. In der Eingangsleitung zur Klemme W liegt ein Schalter S1, mit dem die gesamte Schaltungsanordnung ein- bzw. ausgeschaltet werden kann. Als Schutz gegen Überspannungen auf den ankommenden Signalleitungen ist ein Varistor R3 parallel zu den Eingangsklemmen geschaltet. Der Ansteuerkreis 2 wird mit einer Gleichspannung von 40 V versorgt, die an den Klemmen SV1 und SV2 liegt. Parallel zu diesen Klemmen ist wieder ein Varistor R4 als Überspannungsschutz geschaltet. Eine Gleichrichterbrücke V3 dient zur polungsunabhängigen Versorgung des Ansteuerkreises 2. Die Fotoempfänger der Optokoppler V1, V2 liegen einerseits an dem positives Potential aufweisenden Brückenanschluß und andererseits über einen Widerstand R6 an dem negatives Potential aufweisenden Brückenanschluß. Parallel zu den Fotoempfängern der Optokoppler V1, V2 ist eine Schutzdiode V4 vorgesehen. An dem Verbindungspunkt zwischen den Fotoempfängern und dem Widerstand R6 ist über einen Widerstand R5 die Basis eines Schalttransistors V6 angeschlossen, dessen Emitter auf dem negativen Potential bzw. Masse liegt und dessen Kollektor mit einem Relais K1 verbunden ist, das andererseits an die Anschluß leitung mit positivem Potential angeschlossen ist. Parallel zum Relais K1 liegt eine Schutzdiode V5.

Im Falle eines Anrufes gelangt das digitale Anrufsignal, das einen Ruhepegel (0) und einen Aktiv-Pegel (1) aufweist, an die Eingangsklemmen W, M1 der Anpassungsschaltung 1 und regt eine der Sendedioden der Optokoppler V1, V2 zur Strahlung an. Die antiparallele Beschaltung gewährleistet eine sichere Funktion auch bei Verpolung der Signalleitungen. Bei dem Pegel 1 werden die Fotoempfänger der Optokoppler V1, V2 durchgeschaltet, so daß das Potential an der Basis des Schalttransistors V6 sich zu positiven Wertenverschiebt, wodurch der Transistor V6 durchschaltet und das Relais K1 erregt. Der als Schließer ausgebildete Kontakt k1 des Relais K1 in dem Starkstromkreis 3 schließt somit im Rhythmus des Rufs, wodurch das im Starkstromkreis 3 liegende Signalgerät 4 erregt wird. Der Starkstromkreis 3 ist somit galvanisch sowohl vom Ansteuerkreis 2 als auch vom Anpassungskreis 1 bzw. vom Fernmeldekreis getrennt.

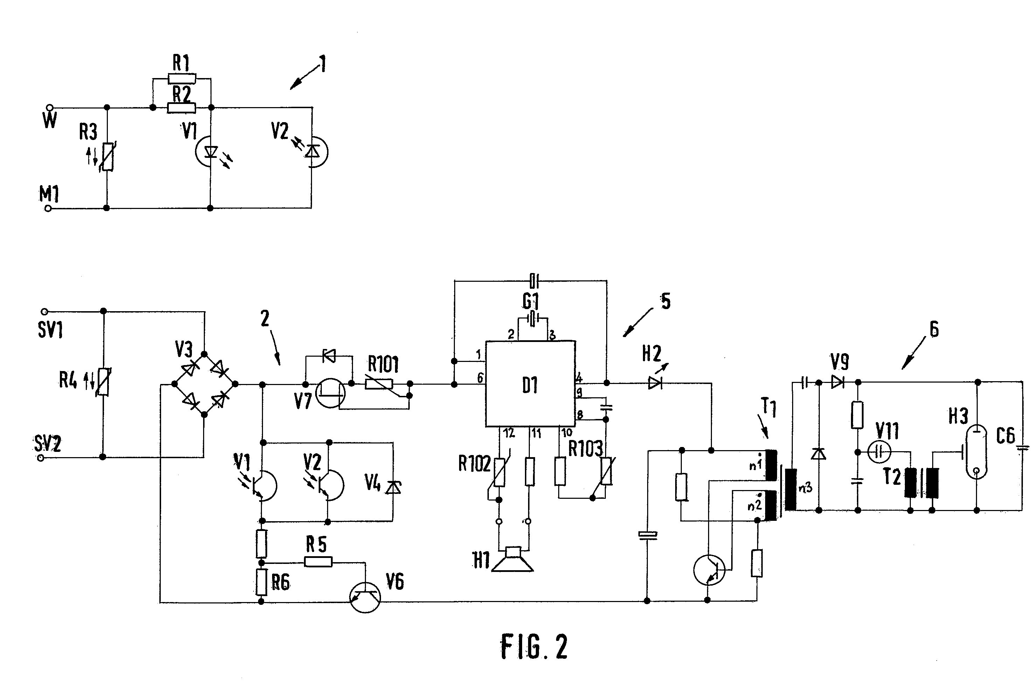

In Fig. 2 ist der Aufbau der Anpassungsschaltung 1 und der Ansteuerschaltung 2 im wesentlichen gleich, aber anstelle des Relais K1 sind optische und akustische Signalgeräte 5, H2, 6 vorgesehen, die ebenfalls von der Gleichspannung an den Klemmen SV1, SV2 versorgt werden. Das akustische Signalgerät weist einen integrierten Schaltkreis D1 auf, der Teiler enthält und abhängig von dem vom Transistor V6 gelieferten Signal elektrische Signale an ein Piezoelement H1 liefert, durch das sie in die gewünschten akustischen Signale umgesetzt werden. Die Teiler in der integrierten Schaltung D1 teilen die von einem Resonator G1 gelieferte Resonanzfrequenz in drei unterschiedliche Frequenzen herunter, so daß ein Dreiton erzeugt wird. Mit einem zwischen dem Ausgang der integrierten Schaltung D1 und dem Piezoelement H1 liegenden Potentiometer R102 läßt sich die Lautstärke einstellen. Weiterhin ist über ein mit anderen Eingängen der integrierten Schaltung D1 verbundenes Potentiometer R103 vorgesehen, mit dem die Tonfolgefrequenz bzw. Wiederholfrequenz der drei Tonfrequenzen einstellbar ist, wobei ebenfalls die in der integrierten Schaltung D1 enthaltenen Teiler die von dem Resonator G1 vorgegebene Frequenz auf die gewünschte Wiederholfrequenz herunterteilen.

Das optische Signalgerät H2 ist als Leuchtdiode ausgebildet, die im Versorgungsstrompfad der integrierten Schaltung D1 liegt.

Bei dem optischen Signalgerät 6 wird die optische Signalisierung durch einen Elektronenblitz H3 realisiert. Die Energiezufuhr des optischen Signalgerätes 6 erfolgt ebenfalls aus dem Versorgungsstrom der integrierten Schaltung D1 des akustischen Signalgebers 5, wobei zwischen Transistor V6 und Leuchtdiode H2 bzw. integrierte Schaltung D1 die Primärseite eines selbstschwingenden Übertragers T1 geschaltet ist. Die Spannung wird auf die Sekundärseite hochtransformiert, über die Diode V9 gleichgerichtet und lädt einen zu einer Blitzlampe H3 parallelgeschalteten Kondensator C6 auf, bis das Entladungsgefäß V11 zündet und über den Zündtransformator T2 die Blitzlampe H3 ansteuert und zündet. Die Restenergie des Kondensators C6 entlädt sich in der Funkenstrecke der Blitzlampe H3.

In dem Versorgungsstrompfad ist eine Konstantstromquelle geschaltet, die einen Feldeffekttransistor V7 und einen einstellbaren Widerstand R101 aufweist, wobei der Widerstand R101 derart eingestellt ist, daß mindestens zwei Blitze pro Ruf erzeugt werden können und daß der Schalldruck des akustischen Signalgebers 5 eine bestimmte Höhe aufweist. Außerdem dient die Konstantstromquelle als Strombegrenzung des an die Signalgeräte gelieferten Stromes.

Die Beschaltung der in der Zeichnung dargestellten und in der Beschreibung nicht erwähnten Bauelemente ist allgemein bekannt und interessiert hier nicht weiter, so daß ihre Einzelheiten aus der Darstellung selbst entnommen werden können.

**Patentansprüche**

1. Schaltungsanordnung zur Signalisierung eines Anrufes für ein in ein digitales Fernsprechnetz geschaltetes Endgerät, wobei das Anrufsignal als digitales Signal an einer Schnittstelle vorliegt, **dadurch gekennzeichnet ,** daß ein Schnittstellen-Anpassungskreis (1) mit seinen Eingangsklemmen (W,M1) an der Schnittstelle liegt, die mit dem einen Teil einer galvanisch getrennten Signalübertragungseinheit (V1,V2) verbunden sind, deren anderer Teil in einem mit Gleichstrom versorgten Ansteuerkreis (2) liegt, wobei der andere Teil an einen Schalter (V6) angeschlossen ist und diesen abhängig von dem digitalen Signal an der Schnittstelle steuert, und daß der Schalter (V6) mit einem Signalgerät (4,5,H2,6) in Wirkverbindung steht.

2. Schaltungsanordnung nach Anspruch 1, dadurch gekennzeichnet, daß die Signalübertragungseinheit als Optokoppler (V1,V2) ausgebildet ist.

3. Schaltungsanordnung nach Anspruch 1 oder 2, dadurch gekennzeichnet, daß der Schalter (V6) ein elektronischer Schalter ist, dessen Steuerelektrode mit dem anderen Teil der Signalübertragungseinheit (V1,V2) verbunden ist.

4. Schaltungsanordnung nach einem der Ansprüche 1 bis 3, dadurch gekennzeichnet, daß zum Schutz bei Verpolung zwei Optokoppler (V1,V2) vorgesehen sind, deren Sendedioden im Schnittstellen-Anpassungskreis (1) antiparallel geschaltet sind und daß zur polungsunabhängigen Versorgung des Ansteuerkreises (2) eine Gleichrichterbrücke (V3) vorgesehen ist.

5. Schaltungsanordnung nach einem der Ansprüche 1 bis 4, dadurch gekennzeichnet, daß das Signalgerät (4) eine eigene Stromversorgung aufweist, wobei zur galvanischen Trennung des Signalgerätes (4) von dem Ansteuerkreis (2) der Schalter (V6) mit einem Relais (K1) verbunden ist, über dessen Kontakt(k1) das Signalgerät (4) angesteuert wird.

6. Schaltungsanordnung nach einem der Ansprüche 1 bis 5, dadurch gekennzeichnet, daß in die Eingangsleitung des Schnittstellen-Anpassungskreises (1) ein Schalter (S1) geschaltet ist.

7. Schaltungsanordnung nach einem der Ansprüche 1 bis 4, dadurch gekennzeichnet, daß das Signalgerät (5,H2,6) als in dem Gleichstrompfad des Ansteuerkreises (2) liegendes und direkt von diesem versorgtes optisches und/oder akustisches Signalgerät (5,H2,6) ausgebildet ist.

8. Schaltungsanordnung nach Anspruch 7, dadurch gekennzeichnet, daß das optische Signalgerät eine Leuchtdiode (H2) und/oder einen Elektronenblitz (H3) aufweist.

9. Schaltungsanordnung nach Anspruch 8, dadurch gekennzeichnet, daß das einen Elektronenblitz (H3) aufweisende optische Signalgerät (6) mit einem selbstschwingenden Übertrager (T1) versehen ist, dessen Primärseite in den Gleichstrompfad des Ansteuerkreises (2) geschaltet ist.

10. Schaltungsanordnung nach einem der Ansprüche 7 bis 9, dadurch gekennzeichnet, daß zur Einstellung des Energiebedarfs der Signalgeräte und zur Strombegrenzung eine Konstantstromquelle (V5,R101) in den Gleichstrompfad geschaltet ist.

11. Schaltungsanordnung nach Anspruch 10, dadurch gekennzeichnet, daß die Konstantstromquelle einen Feldeffekttransistor (V7) und einen einstellbaren Widerstand (R101) aufweist, der derart eingestellt ist, daß der Elektronenblitz (H3) mindestens zwei Blitze pro Ruf erzeugt und der Schalldruck des akustischen Signalgerätes (5) eine vorgegebene Höhe erreicht.

FIG.1

FIG. 2